# EUROPEAN PATENT APPLICATION

(11) **EP 2 921 246 A1**
(43) Date of publication of application: **23.09.2015**
(21) Application number: 15159409.0
(22) Date of filing: 17.03.2015
(51) Int. Cl.: B23B 21/00, F28D 7/14

(54) **Machine for cutting pipes of coils for a heat exchanger in an automatic and predetermined way**

(30) Priority: 19.03.2014 IT MI20140453
(71) Applicant: A-Steel S.R.L., 36100 Vicenza (IT)
(72) Inventor: Aleardi, Daniele, 36075 Montecchio Maggiore (VI) (IT)
(74) Representative: Ripamonti, Enrico

(57) **Abstract**

A machine for cutting the ends (6, 7) of a coil (5) for a heat exchanger in an automatic and predetermined way, said coil (5) comprising a pipe (10) or a pair of pipes (10, 11) of different cross-sections, wherein a first outside pipe (10) contains the second pipe (11), said machine (1) comprising means (52) for cutting said coil (5). The machine comprises movable holding means (15, 17) while cutting the ends (6, 7) of the coil (5) positioned in a work zone (4) of means (3) used to support the coil itself, the cutting means (52) being movable with respect to said ends (6, 7) in a programmable way and under the control by control means.

The method for cutting said coil operated by said machine is also claimed.

## Description

The object of the present invention is a machine for cutting the ends of a coil for a heat exchanger in an automatic and predetermined way, according to the preamble of its corresponding independent claim. Another object of this invention is also a method for performing the above mentioned cutting of the ends of a coil according to the preamble of its corresponding independent claim.

It is known that, after obtaining a coil for a heat exchanger, as in a boiler, its free ends are cut in order to reduce its dimensions as a function of its application. Such a cutting, which is obtained by using appropriate devices known by themselves, is usually carried out in such ways that do not comprise any automatism in positioning the coil in a cutting zone and/or in executing such cutting as a function of the length of every end of the coil to be obtained. It follows that said cutting operation, besides being potentially inaccurate, has non negligible costs basically related to the times needed to perform it: since such operation cannot at present be performed automatically, a high accuracy is required to position the coil in the cutting zone as well as to carry out the latter operation, which entails a lengthening of the times necessary to perform it. Consequently, this affects the cost of the coil.

A purpose of the present invention is to offer a machine and a method to cut the ends of a coil for a heat exchanger in an automatic, repeatable, and predetermined way.

Specifically, a purpose of the invention is to offer a machine of the mentioned type that is easy to use and allows a quick cutting of the ends of the coil so as to reduce the times and costs of such an operation.

Another purpose is to offer a machine of the mentioned type that is capable of operating on single-pipe coils or on coils of a type comprising two pipes, wherein a first pipe is contained inside the second one.

These purposes and others that will be apparent to skilled men in the art are achieved by a machine and by a method according to the attached claims.

For a better understanding of the present invention the following drawings are attached for explanatory, nonlimiting, purposes, in which:

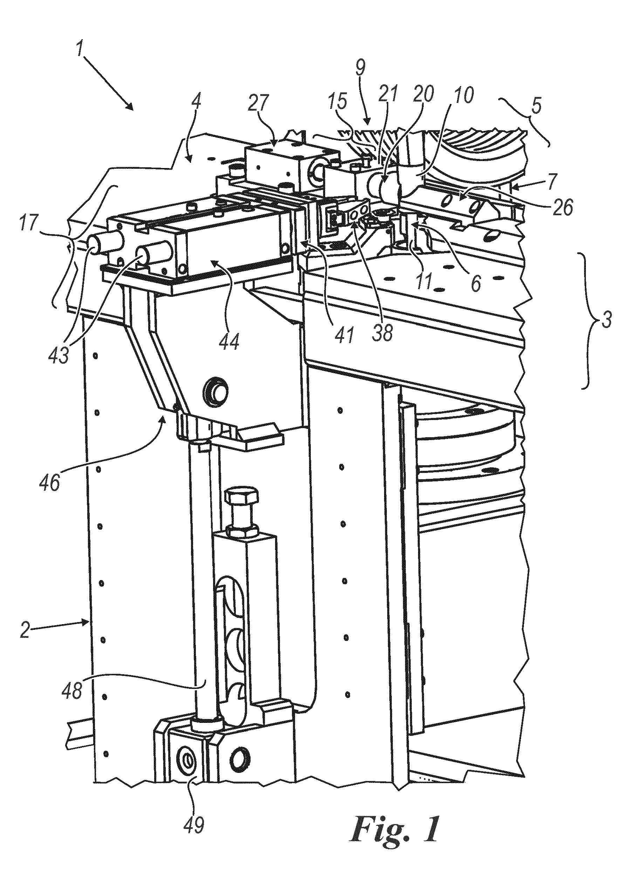

figure 1 shows a partial, one-side perspective view of a first embodiment of a machine according to the invention in an operating step;

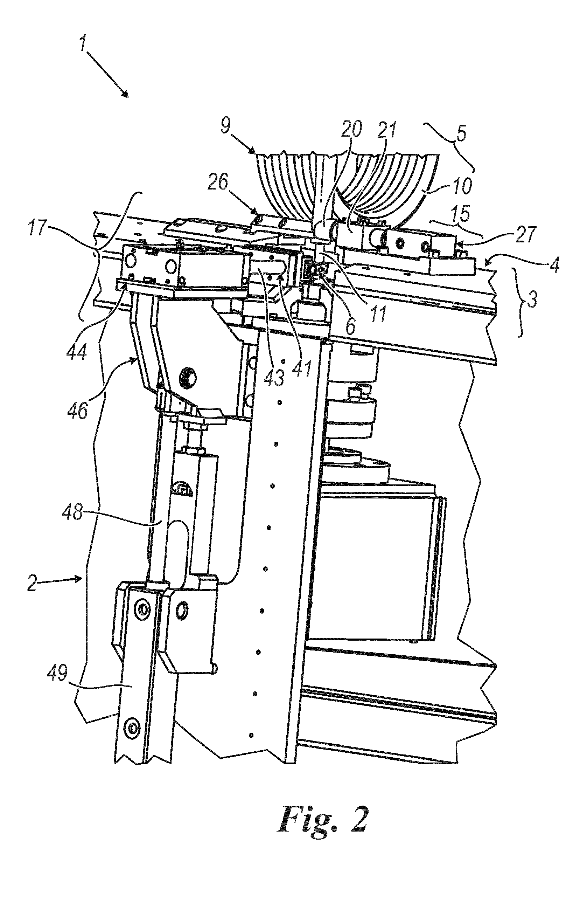

figure 2 shows a view similar to that of figure 1, but referred to a variant of the machine depicted in figure 1, in an operating step thereof successive to that shown in said figure 1, said variant showing the component parts present in a work zone of the machine of figure 1 arranged specularly with respect to those of the latter;

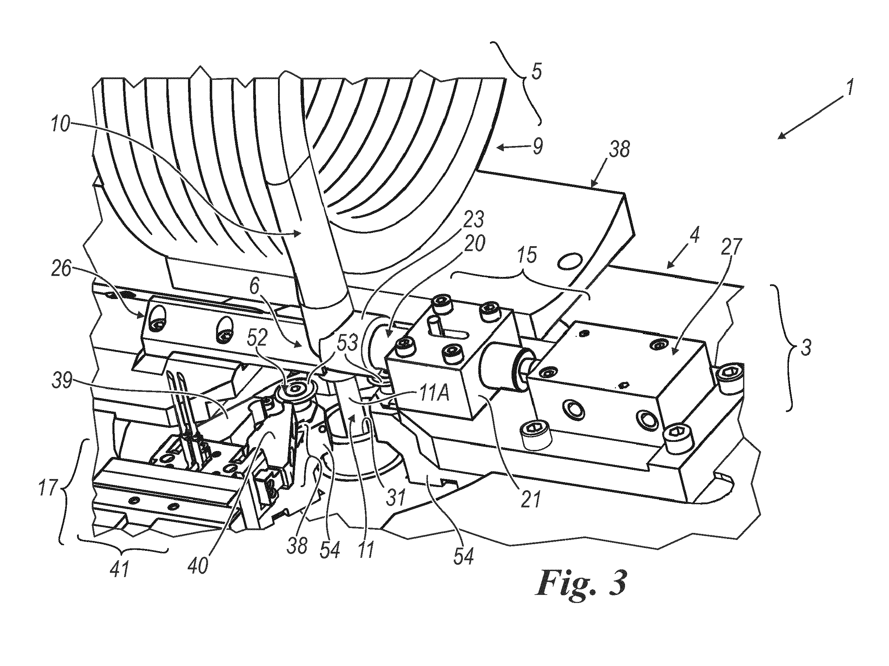

figure 3 shows a closed, top perspective view, of what shown in figure 1;

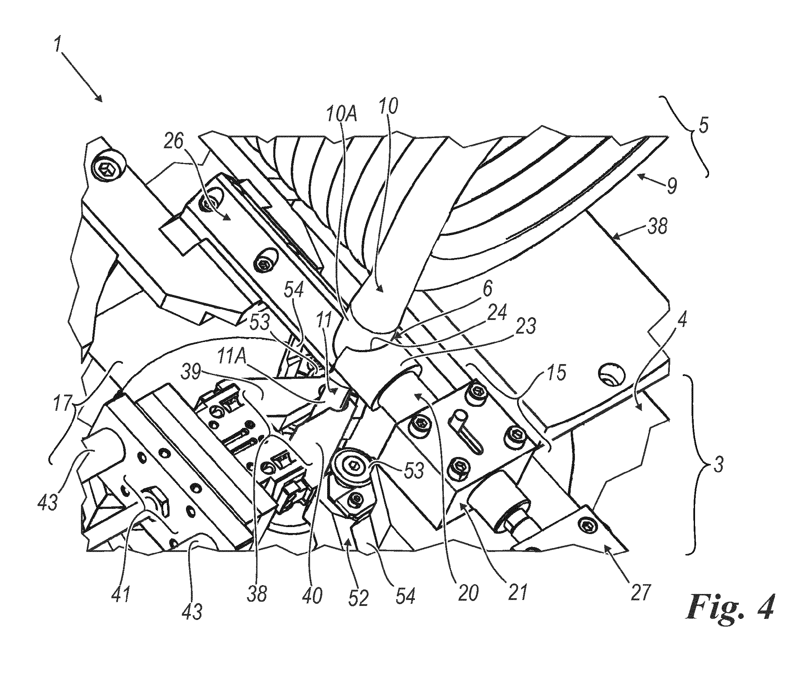

figure 4 shows a closed, top perspective view, of what shown in figure 2; and

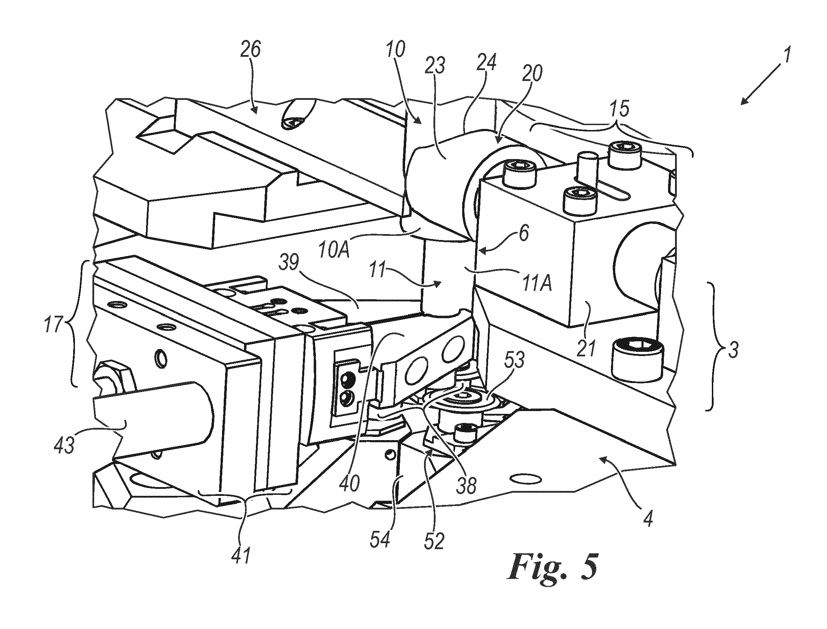

figure 5 shows a view similar to that of figure 4, but further closed.

With reference to the mentioned figures, a cutting machine according to the invention is generically identified by the reference numeral 1 and comprises a base 2 and a support part 3 in which a work zone 4 is defined, where a coil 5 for a heat exchanger, for instance for a boiler, is positioned. The coil 5 comprises a body 9 defined by a plurality of spirals and having two opposed free ends 6 and 7.

In the example depicted by the figures, such body is determined by two pipes, a first (outer) pipe 10 containing the second pipe 11, the latter protruding with its opposed ends 11A from the opposed ends 10A of the first pipe.

According to the invention, the above mentioned cutting machine comprises means for holding the pipe while the latter is cut and means for performing the cutting operation in a repeated and constant way, such cutting operation being performed at the free ends of the pipe as a function of the length desired for the ends 10A and 11A of the spiral-shaped body.

More specifically, in correspondence with the work zone 4 there are first movable coil pipe holding means 15, be it the one pipe thereof or its first (outer) pipe 10, should the coil comprise two pipes (10, 11) inserted in each other. Reference will now be made to the latter embodiment.

Such first means are associated with and movable with respect to the support part 3 of the machine, second movable pipe holding means 17 being provided, located on a side of the support part 3.

The first means 15 comprise a member 20 which is translationally movable parallel to the support part 3 and is supported by a guide member 21 of its own fixed to said support part 3. The translationally movable member has the shape of a linear piston an end or head 23 of which comprises a concave seat 24 suitable for form coupling with the pipe 10 to hold it blocked and in contact with a counterplate 26 fixed to said support part 3. The translationally movable member or piston 20 is driven by a pneumatic, hydraulic, hydropneumatic or electric actuator 27 fixed to the support part 3 and moves within the guide member 21. The end 6 (or 7) of the coil 5 that is being machined is arranged perpendicularly to the support part 3, in correspondence with a hole 31 present in the latter. In order to get such a positioning, the body 9 of the coil laterally lays on a support 33 present aside the work zone 4.

Between the translationally movable member 20 and said hole 31 the second holding means 17 are located. The latter comprise the pliers 38 having two jaws 39 and 40 (suitable for closing onto the inner pipe 11 of the coil 5) operated via an actuator (not shown in the figures) associated with a movable head 41 of a known type. For instance, such an actuator might be of a pressurized-fluid (pneumatic, hydraulic, or hydropneumatic), magnetic or electric type. The movable head 41 is supported by tubular members 43 moved toward the work zone 4 or far away therefrom by a hydraulic, pneumatic, or hydropneumatic, or electric actuator 44 of its own carried by a support 46 located on a side of the support part 3 and movable in height with respect thereto. For this purpose, such support 46 is associated with a stem or shaft 48 which is telescopically movable with respect to a sleeve 49 fixed to the base 2, said motion being preferably obtained by means of a pressurized fluid (air and/or oil) present in such sleeve.

In this way, the second holding means 17 can be lifted or lowered with respect to the work zone 4, drawn closer to or moved away from the end 6 (or 7) of the coil 5 so as to possibly close onto the inner pipe 11 of the latter by means of its own pliers 38. Such vertical positioning (lifting and lowering) movements are controlled by a control unit (not shown in the figures) which controls the operation of both holding means 15 and 17. Thanks to the monitoring performed via position sensors, to pressurized fluid circuit pressure sensors associated with both such means, or to electric handler sensor movement control sensors associated with said means (as a function of their embodiment), the control unit controls the movements of said holding means in an automatic and predetermined way as a function of the position where the end 6 or 7 of the coil 5 is to be cut by cutting means 52 present in the work zone 4.

The cutting means 52 are preferably three disc blades 53 interposed between the holding means 17 and the hole 31 present in the work zone 4. Such blades 53 are supported by corresponding movable (on at least two axes X and Y) arms 54, operated by (hydraulic, pneumatic, hydropneumatic, or electric) actuators of their own, not shown in the figures (or by at least one actuator that drives them simultaneously via mechanical transmissions and/or belts or chains); said arms and their corresponding blades 53 are angularly spaced by 120° from each other so as to be arranged around the pipe 10 or 11 being machined and to perform a complete and burrless cutting thereof. That part of the pipe which is cut off falls into the hole 31 and is recovered underneath the work zone.

Therefore, thanks to the invention it is possible to cut the ends of a coil 5, after obtaining it, in an automatic, adjustable, and predetermined way. For this purpose, let us suppose to place the coil on a support 33 so that a first end 6 thereof penetrates the hole 31 of the work zone 4 or is arranged in correspondence therewith.

At this point, an operator activates the first holding means 15 by putting the translationally movable member 20 in contact, via its head 23, with the pipe 10 which is thus clamped by said head against the fixed counterplate 26. Automatically, controlled by the control unit (for instance a PLC or a microprocessor unit), are the arms 54 activated to move on a plane orthogonal to the support part 3 (with respect to the hole 31 present therein) up to the preset cutting height; then the arms 54 are moved parallel to said plane in order for the disc blades 53 to operate onto the pipe 10 and to cut it off. Obviously the arms 54 can simultaneously move in height and in approach to the pipe, thus originating a combined movement of translations parallel and orthogonal to the above plane orthogonal to the support part 3.

The pipe 10 having been completely cut off, the arms 54 move away from the end 6 of the spiral, while the second holding means 17 are automatically activated. Their pliers 48 get closer to the (inner) pipe 11 by moving at least parallel to the plane 4. If necessary, said holding means 17 lift with respect to the latter to reach the position where they hold the second inner pipe 11 of the coil, such a lift being obtained by moving the stem or shaft 48 that supports them.

Having held the second pipe 11, the arms 54 are (simultaneously) operated again to reach their cutting position and perform the cutting operation by means of the blades 53. Having finished to cut off the second pipe 11 too, all holding means 15, 17 are separated from the coil 5 and the operator can at this point re-position it onto the support part 3 in order for its second end to be cut off, which operation will take place according to the same procedure followed to cut off the first end 6.

Thanks to the invention, it is possible to cut the ends 6 and 7 of the coil to any length as necessary.

A preferred embodiment of the invention has been described. Others, however, can be envisaged: for instance, the arms 53 might be supported by one cutting spindle. This one can move vertically with respect to the work zone 4, the arms translating horizontally onto the spindle. Furthermore, an embodiment has been described in which the spiral being machined is a "pipe-in-pipe" one, i.e. a dual-pipe spiral wherein a first pipe is inserted in the second one; however, the machine is also capable of operating onto a single-pipe coil, still in an automatic and predetermined way. In this event, the second holding means 17 will not be operated.

These variants shall also be considered as falling in the scope of the following claims.

## Claims

1. A method for cutting the ends (6, 7) of a spiral pipe or coil (5) for a heat exchanger, said cutting being performed by means of a machine (1) presenting a support part (3) supporting cutting means (52), said coil or spiral pipe comprising alternatively a pair of pipes (10, 11) of different cross-sections, a first pipe (10) containing the second one (11), said method comprising the following steps:
- positioning the spiral pipe or coil (5) onto said machine (1) so that a first end (6) thereof to be cut off is positioned in a work zone (4) of the support part in correspondence with the cutting means (52);
- holding said end (6) in a position suitable for cooperating with said cutting means (52);
- moving said cutting means (52) so that they get in contact with the end (6) of the coil (5) in order for it to undergo the cutting operation;
- after the disconnection of the cut off section of the coil (5), separating the cutting means (52) therefrom and releasing the end (6) of the coil being machined;
- subsequently positioning the second end (7) in the work zone (4), holding it in a position suitable for cooperating with the cutting means (52), moving the latter toward said end (7), and cutting the latter off, said holding of said end (6, 7) and said movements of said cutting means being obtained in an automatic and predetermined way under the control by a control unit in charge of controlling said operations, said coil comprising two pipes (10, 11), one (11) contained in the other (10), **characterized in that** the method comprises a first holding of the first pipe (10), its cutting, the holding of the second pipe (11) and its cutting, said holding and cutting being performed automatically under the control by the control unit.

2. A machine for cutting the ends (6, 7) of a spiral pipe or coil (5) for a heat exchanger in an automatic and predetermined way, said spiral pipe or coil (5) comprising a pair of pipes (10, 11) of different cross-sections, wherein a first pipe (10) contains the second one (11), said machine (1) comprising cutting means (52) for cutting said coil (5), such machine comprising movable holding means (15, 17) while cutting the ends (6, 7) of the coil (5) positioned in a work zone (4) of means (3) used to support the coil itself, the cutting means (52) being movable with respect to said ends (6, 7) in a programmable way and under the control by control means, said movable holding means (15) comprising a first member (20) which is translationally movable with respect to the work zone (4) of the support means (3) and provided with an end or head (23) suitable for getting in contact and form-coupling with the pipe (10) of the coil, said translationally movable member (20) being moved by an actuator (27) of its own controlled by the control unit, said translationally movable member holding such pipe (10) against a fixed counterplate (26) integral with such work zone (4), **characterized in that** the movable holding means 17) comprise a second movable pliers-shaped member (38) suitable for cooperating with the second inner pipe (11) of the coil and for holding it while it is cut off, said movable pliers-shaped member (38) being interposed between the first translationally movable member (20) and the work zone (4) and being controlled by said control unit.

3. A machine according to claim 2, **characterized in that** said translationally movable member (20) is supported by a guide member (21) integral with the work zone (4), with the latter the translationally movable member actuator (27) being also integral.

4. A machine according to claim 2, **characterized in that** said second pliers-shaped member (38) is supported by movable members (43) operated by an actuator (44) carried by a support (46) located on the side of the work zone, movable in height with respect to the latter, said support (46) being associated with a telescopic type movement actuator having a stem (48) integral with said support (46) movable in a sleeve (49) fixed to a base (2) of the machine (1), said base carrying the support means (3) comprising the work zone (4).

5. A machine according to claim 2, **characterized in that** the cutting means comprise a plurality of disc blades (53) movable on at least two orthogonal axes or via a combined movement on a plane determined by said axes so as to get closer to or move away from the ends (6, 7) of the coil (5) being machined, each of said movements being obtained under the control by the control unit.

6. A machine according to claim 5, **characterized in that** the disc blades (53) are angularly spaced by 120° from each other around the end (6, 7) of the coil (5).

7. A machine according to claim 6, **characterized in that** said disc blades (53) are alternatively supported by arms (54) of their own movable along the two axes or in the plane defined by them or by a vertically movable spindle, the arms (54) moving horizontally on said spindle.

8. A machine according to claim 2, **characterized in that** the work zone (4) comprises a hole (31) to receive the cut off end (6, 7) of the coil.

9. A machine according to claim 2, **characterized in that** the control means are a PLC, a microprocessor unit, or the like.
